# EUROPÄISCHE PATENTSCHRIFT

(11) **EP 2 454 205 B1**
(45) Veröffentlichungstag und Bekanntmachung des Hinweises auf die Patenterteilung: **09.09.2015**
(21) Anmeldenummer: 10730756.3
(22) Anmeldetag: 01.07.2010
(51) Int. Cl.: C03B 19/14, C03B 23/049, C03B 23/051

(54) **VERFAHREN ZUR HERSTELLUNG EINER MENISKUSLINSE AUS SYNTHETISCHEM QUARZGLAS**
METHOD FOR THE PRODUCTION OF A MENISCUS LENS OF SYNTHETIC QUARTZ GLASS
PROCÉDÉ DE FABRICATION D'UNE LENTILLE MÉNISQUE EN VERRE DE SILICE SYNTHÉTIQUE

(30) Priorität: 15.07.2009 DE 102009033497
(43) Veröffentlichungstag der Anmeldung: 23.05.2012
(73) Patentinhaber: Heraeus Quarzglas GmbH & Co. KG, 63450 Hanau (DE)
(72) Erfinder: HENGSTER, Stefan, 60528 Frankfurt (DE)
(74) Vertreter: Staudt, Armin Walter
(86) Internationale Anmeldenummer: PCT/EP2010/059340
(87) Internationale Veröffentlichungsnummer: WO 2011/006759

(56) Entgegenhaltungen:
- EP-A1- 0 735 006
- EP-A1- 1 081 106
- WO-A1-02/32622
- US-A1- 2007 266 733

## Beschreibung

Die vorliegende Erfindung betrifft ein Verfahren zur Herstellung einer Meniskuslinse aus synthetischem Quarzglas für den Einsatz in einem Mikrolithographiegerät, die eine erste optische Oberfläche und eine zweite optische Oberfläche mit gleicher Krümmungsrichtung wie die erste optische Oberfläche aufweist, umfassend einen Verfahrensschritt, bei dem SiO₂-Partikel durch Oxidation oder Flammenhydrolyse einer siliziumhaltigen Ausgangsverbindung gebildet werden und diese schichtweise auf einem Träger unter Bildung eines zylinderförmigen SiO₂-Rohlings, der Schichten mit einer sich in Aufwachsrichtung erstreckenden Flächennormalen enthält, abgeschieden werden.

### Stand der Technik

Eine Meniskuslinse hat eine konvexe optisch wirksame Linsenfläche und gegenüberliegend eine konkave optisch wirksame Linsenfläche. Beide Linsenflächen wirken optisch unterschiedlich sind aber in gleicher Richtung gekrümmt. Diese Richtung wird hier als "Krümmungsrichtung" bezeichnet.

Verfahren zur Herstellung von synthetischem Quarzglas durch Oxidation oder durch Flammenhydrolyse siliziumhaltiger Ausgangssubstanzen sind unter den Bezeichnungen VAD-Verfahren (Vapor Phase Axial Deposition), OVD Verfahren (Outside Vapor Phase Deposition) und PCVD Verfahren (oder auch PECVD-Verfahren; Plasma Enhanced Chemical Vapor Deposition) allgemein bekannt.

Dabei werden in der Regel mittels eines Abscheidebrenners SiO₂-Partikel erzeugt und schichtweise auf einem Träger abgeschieden. Bei hinreichend hoher Temperatur im Bereich der Trägeroberfläche kommt es zu einem unmittelbaren Verglasen der SiO₂-Partikel ("Direktverglasen"). Im Unterschied dazu ist bei dem so genannten "Sootverfahren" die Temperatur während des Abscheidens der SiO₂-Partikel so niedrig, dass eine poröse Sootschicht erhalten wird, die in einem separaten Verfahrensschritt zu transparentem Quarzglas gesintert wird. Sowohl das Direktverglasen als auch das Sootverfahren führen zu einem dichten, transparenten, hochreinen, synthetischen Quarzglas.

Es ist bekannt, dass bedingt durch das schichtweise Abscheiden der SiO₂-Partikel schichtförmige Inhomogenitäten im Quarzglas auch bei aller Sorgfalt kaum zu vermeiden sind. Derartige Inhomogenitäten werden durch Temperaturschwankungen oder Änderungen der chemischen Zusammensetzung oder der Dichte des Quarzglases während des Abscheideprozesses hervorgerufen.

Die Schichten enthaltenden Quarzglasrohlinge in Form von Stäben, Blöcken, Rohren oder Platten werden zu optischen Bauteilen, wie insbesondere zu Linsen, Fenstern, Filtern, Maskenplatten und dergleichen weiterverarbeitet, insbesondere für optische Bauteile zur Übertragung energiereicher, ultravioletter Strahlung in Belichtungs- und Projektionsoptiken in Mikrolithographiegeräten. Die Belichtungsund Projektionssysteme moderner Mikrolithographiegeräte sind mit Excimerlasern bestückt, die energiereiche, gepulste UV-Strahlung einer Wellenlänge von 248 nm (KrF-Laser) oder von 193 nm (ArF-Laser) abgeben.

Bei derartigen mikrolithographischen Projektionsbelichtungsanlagen besteht allgemein die Forderung, dass eine im Bereich einer Pupillenebene des Beleuchtungssystems bereitgestellte Lichtverteilung möglichst homogen und winkelerhaltend in eine zur Pupillenebene des Beleuchtungssystems konjugierte Pupillenebene des Projektionsobjektivs übertragen werden sollte. Jede im Lichtweg erzeugte Veränderung des Winkelspektrums führt zu einer Verzerrung der Intensitätsverteilung in der Objektivpupille, was zu einer unsymmetrischen Einstrahlung und damit zu einer Verschlechterung der Abbildungsleistung führt.

Das optische Projektions- oder Belichtungssystem umfasst eine Vielzahl optischer Elemente, insbesondere Linsen. Selbst wenn eine Änderung der Transmission oder der optischen Abbildung bei einer einzelnen Linse gering ist, addiert sich dieser Effekt über die gesamten Linsen des Systems und verringert dessen Abbildungstreue und Transmission.

In dem Zusammenhang spielen die erwähnten Schichten eine wichtige Rolle, da diese die Abbildungseigenschaften optischer Bauteile aus Quarzglas verändern können. Daher wird in aller Regel ein möglichst schichtenfreies Quarzglas angestrebt, indem die Ausbildung von Schichten bei der Synthese des Glases minimiert wird, oder indem vorhandene Schichten nachträglich entfernt werden.

Wegen seiner schichtweisen Herstellung und der hohen Viskosität von synthetischem Quarzglas sind aber sowohl die Vermeidung von Schichten als auch deren nachträgliche Beseitigung mit hohem Aufwand verbunden.

Um diesen Aufwand zu vermeiden, wird in der EP 0 735 006 A1 eine bikonvexe Linse aus synthetischem Quarzglas für den Einsatz in der Mikrolithographie sowie ein Verfahren für dessen Herstellung vorgeschlagen, wobei Schichten zugelassen werden, wenn sie planar sind.. Die die planaren Schichten enthaltende Linse ist in Bezug auf den Strahlengang des optischen Systems so anzuordnen, dass die Schichten im Wesentlichen senkrecht zur optischen Achse verlaufen. Um die gewünschte Planarität der Schichten zu erreichen werden zwei Verfahrensweisen vorgeschlagen.

Bei der einen Verfahrensweise wird versucht, bereits während des Abscheideverfahrens mittels der VAD-Methode planparallele Schichten zu erzeugen. Randbereiche, die diese Bedingung nicht erfüllen werden abgeschnitten und aus dem so erhaltenen Block mit planparallel verlaufenden Schichten wird die Bikonvex-Linse mittels mechanischer Bearbeitung, also durch Schneiden, Fräsen, Polieren und Honen herausgearbeitet.

Bei einer zweiten Verfahrensweise werden gekrümmte Schichtenverläufe bei der Herstellung eines Quarzglasblocks mittels VAD-Verfahren zugelassen. Aus dem Quarzglasblock wird anschließend mechanisch ein zylinderförmiges Halbzeug herausgearbeitet, dessen Stirnseiten parallel zu den gekrümmten Schichten geformt sind. Das Halbzeug wird in einem Heißverformungsverfahren zu einem zylinderförmigen Rohling verformt, bei dem die Stirnseiten und die Schichten planparallel zur Oberfläche verlaufen. Aus diesem Rohling wird wiederum durch mechanische Bearbeitung die gewünschte Bikonvex-Linse durch Schneiden, Fräsen oder Schleifen erhalten.

In der US 5,236,486 A sind optische Linsen aus Weichglas beschrieben, das Profile von Brechzahlgradienten aufweist. Die Gradientenprofile können sphärisch mit axialen als auch radialen Komponenten ausgebildet sein. Sie sollen ein flexibleres Linsendesign ermöglichen. Die sphärischen Brechzahlgradientenprofile können erzeugt werden, indem ein Ausgangskörper des Gradientenglases in einer Form erweicht und dabei verformt wird, wobei die Verformung durch Druck beschleunigt werden kann.

In der WO 02/32622 A1 wird ein Spiegelsubstrat aus Ti-dotiertem Glas für die EUV-Lithographie beschrieben. Zur Herstellung wird von einem plattenförmigen Rohling ausgegangen, in dem bedingt durch einen SiO₂-Abscheideprozess planparallele Schichten verlaufen, die an der Mantelseite austreten. Um beim Polieren ein Schneiden der Schichten zu vermeiden, werden diese verformt, und zwar durch Einsackenlassen des Rohlings in die gewünschte Endform. Das so erhaltene Spiegelsubstrat hat eine gekrümmte Oberfläche, wobei die Schichten der Oberflächenkrümmung über die gesamte Flächenerstreckung folgen

### Technische Aufgabenstellung

Der Erfindung liegt die Aufgabe zugrunde, ein Verfahren zur Herstellung einer Meniskuslinse aus synthetischem Quarzglas für den Einsatz in der Mikrolithografie bereit zu stellen, bei der Schichten zugelassen werden, die eine möglichst geringe Beeinträchtigung optischer oder mechanischer Eigenschaften bewirken.

Diese Aufgabe wird ausgehend von einem Verfahren mit den Merkmalen der eingangs genannten Gattung erfindungsgemäß dadurch gelöst, dass der Rohling in einem Heißverformungsprozess unter Einwirkung einer Verformungskraft zu einer Vorform plastisch umgeformt wird, die mindestens die erste gekrümmte Oberfläche aufweist und in der die Schichten in Krümmungsrichtung gekrümmt verlaufen, und dass aus der Vorform die Meniskuslinse erhalten wird.

Im Gegensatz zum Stand der Technik werden nicht planparallele Schichten zugelassen, sondern solche, die in Richtung der optischen Oberflächen, also in der Krümmungsrichtung der beiden optisch wirksamen Oberflächen der Meniskuslinse, gekrümmt verlaufen. In Krümmungsrichtung gekrümmt verlaufende Schichten beeinträchtigen die optische Abbildung wenig und können sogar positiv dazu beitragen.

Dabei wird davon ausgegangen, dass Schichten in der Meniskuslinse, die sich senkrecht zur Richtung des durchtretenden Lichts erstrecken, keinen nennenswerten Einfluss auf die Brechung und Polarisation des Lichtes ausüben. Je kleiner die Abweichung der Flächennormalen auf die Schichten zur Richtung des durchtretenden Lichts ist, umso geringer sind die Auswirkungen auf Lichtbrechung und Polarisation.

Die Meniskuslinsen werden üblicherweise am Rand eingefasst. Als "optisch wirksame Oberflächen" werden hier die zur optischen Abbildung beitragenden Linsenflächen definiert, das ist im extremen Fall die gesamte sichtbare Linsenfläche bis zur Einfassung.

Gemäß der Erfindung werden die im SiO₂-Rohling vorliegenden Schichten durch einen Heißverformungsprozess, bei dem der gekrümmte Oberflächenbereich des optischen Bauteils erzeugt wird, so umgeformt, dass die Schichten bei der nach dem Heißverformungsprozess erhaltenen Vorform der ersten gekrümmten Oberfläche folgen. Wichtig ist dabei nur der optisch genutzte Flächenbereich der ersten gekrümmten Oberfläche, der beim bestimmungsgemäßen Einsatz der Linse zur optischen Abbildung beiträgt. Dieser Flächenbereich wird hier auch als "optische Oberfläche" bezeichnet, In der Praxis ist anzustreben, dass die Schichten der gekrümmten Oberfläche folgend diese im Bereich der optischen Oberfläche nicht oder allenfalls in einem möglichst spitzen Winkel schneiden. Aus der Vorform wird die Meniskuslinse durch Entfernen eines etwaigen Übermaßes und durch eine mechanische Endbearbeitung, wie Schleifen und Polieren, erhalten. Die mechanische Endbearbeitung kann auch die Herstellung der der ersten gekrümmten Oberfläche gegenüberliegenden zweiten gekrümmten Oberfläche der Meniskuslinse beinhalten. Die mechanische Endbearbeitung der Vorform verändert den vorab eingestellten Schichtenverlauf nicht.

Das Umformen des Rohlings zur Vorform erfolgt mittels einer Umformkraft. Die Schichten sind dabei so orientiert, dass die Schichten-Normalen im Wesentlichen parallel zur Richtung der Verformungskraft verlaufen. Das erfindungsgemäße Verfahren erfordert daher Kenntnis über den Verlauf der Schichten im Rohling beim Umformen im Heißverformungsprozess.

Das Umformen des Rohlings erfolgt durch eine Umformkraft, wie etwa der Schwerkraft, die im Wesentlichen senkrecht zu den Schichten und parallel zur Schichten-Normalen im Rohling wirkt. Optimalerweise ist der Schichtenverlauf auch an die zweite gekrümmte Oberfläche angepasst. Da bei einer Meniskuslinse beide optischen Oberflächen dieselbe Krümmungsrichtung wie die Schichten aufweisen, ist eine gewisse Anpassung in jedem Fall gegeben. In Fällen, bei denen sich die Krümmungsgrade der optischen Oberflächen der Meniskuslinse unterscheiden, wird als erste gekrümmte Oberfläche vorzugsweise diejenige mit der stärkeren Krümmung angesehen. An diese wird der Schichtenverlauf beim Umformschritt möglichst angepasst.

Bei einer ersten bevorzugten Verfahrensvariante ist vorgesehen, dass der Heißverformungsprozess einen Umformschritt umfasst, bei dem der Rohling in eine Drehbank aufgenommen, erweicht und werkzeugfrei zu der Vorform umgeformt wird.

Ein derartiger Prozess ist in der EP 673 888 A1 zum Zweck der vollständigen Entfernung von Schichten beschrieben. In einem Zwischenschritt wird jedoch eine kugelförmige Quarzglasmasse erhalten, die noch Schichten enthält, und zwar mit einer Orientierung, die zumindest teilweise der kugelförmigen Oberfläche folgt.

In dem Fall wird die zweite gekrümmte Oberfläche der Meniskuslinse vorzugsweise durch einen in Richtung der Schichfen-Flächennörmalen wirkenden Pressstempel erhalten. Dieser weist gegebenenfalls eine konvex gekrümmte Pressfläche auf. Bei einer anderen bevorzugten Verfahrensvariante ist vorgesehen, dass der Heißverformungsprozess einen Umformschritt umfasst, bei dem der Rohling mittels einer Glasmacherpfeife aufgenommen, erweicht und in einer Graphitform zu der Vorform umgeformt wird.

Dabei wird ein Glasposten mittels Glasmacherpfeife, die auch in eine Drehbank eingespannt sein kann, aufgenommen und mittels dieser in eine Form gepresst, die die Außengeometrie der ersten gekrümmten Oberfläche vorgibt. Das Aufheizen der Quarzglasmasse erfolgt dabei mittels eines Gasbrenners, wie etwa einem Knallgasbrenner.

Bei einer weiteren bevorzugten Verfahrensvariante ist vorgesehen, dass der Heißverformungsprozess einen Umformschritt umfasst, bei dem der Rohling in einem Ofen erweicht und in eine Graphitform unter Bildung der Vorform ausfließt.

Das Umformen des Rohlings erfolgt hierbei durch Erweichen eines in der Regel zylindrischen Rohlings in einem Ofen und Ausfließenlassen der erweichten Quarzglasmasse in eine Form unter Wirkung allein der Schwerkraft oder einer zusätzlichen Kraft, wie etwa durch Druck oder durch ein Zusatzgewicht. Um eine undefinierte Verformung und Umorientierung der Schichten zu vermeiden sind ein laminares Ausfließen der Quarzglasmasse und eine möglichst kurze Fließstrecke erwünscht. In dem Zusammenhang hat es sich bewährt, wenn die Graphitform eine gewölbte Unterseite aufweist, die die erste gekrümmte Oberfläche erzeugt, und dass die zweite gekrümmte Oberfläche durch plastische Vorform mittels eines auf den Rohling in Richtung der Schichten-Flächennormalen einwirkenden gewölbten Körpers erzeugt wird.

Mit dem auf den erweichten Rohling einwirkenden gewölbten Körper wird vorzugsweise gleichzeitig die zweite gekrümmte Oberfläche der Linse vorgeformt. Es handelt sich beispielsweise um einen Pressstempel oder um einen auf dem Rohling aufliegenden Gewichtskörper, mit jeweils konkaver oder konvexer Krümmung.

In der Praxis ist anzustreben, dass die Schichten der gekrümmten Oberfläche folgend diese im Bereich der optischen Oberfläche nicht oder allenfalls in einem möglichst spitzen Winkel schneiden. Gemäß der Erfindung trifft dies zumindest für diejenige Schicht zu, die der gekrümmten Oberfläche unmittelbar benachbart ist. Schichten, die die erste oder zweite gekrümmte Oberfläche der Meniskuslinse im optisch wirksamen Bereich schneiden, sind umso kritischer, je stumpfer der Winkel ist, in dem die Schicht die gekrümmte optische Oberfläche schneidet.

Vorzugsweise verläuft die Flächennormale auf die der ersten gekrümmten Oberfläche benachbarte Schicht über ihre gesamte Flächenerstreckung in einem Winkel zwischen 70° und 110° zur ersten gekrümmten Oberfläche, vorzugsweise in einem Winkel zwischen 80° und 100°.

Im Unterschied zum bekannten Verfahren führt das erfindungsgemäße Verfahren zu Schichten, die mindestens im benachbarten Bereich der Krümmung der Oberfläche im Wesentlichen folgen und daher entweder nicht auf die optisch wirksame Oberfläche treffen oder jedenfalls nicht in einem stumpfen Winkel (von etwa 90 Grad).

Die Schichten, insbesondere die Schicht, welche der ersten gekrümmten Oberfläche benachbart st, zeigen einen ähnlichen Krümmungsradius wie die erste gekrümmte Oberfläche. Demzufolge schneiden die Schichten die Linsen-Oberfläche im optisch gekrümmten Bereich im Idealfall überhaupt nicht, und in der Praxis schmiegen sich die Schichten möglichst weitgehend an die erste gekrümmte Oberfläche an oder verlaufen parallel zu dieser.

Je größer die Abweichung der Schicht-Normalen zur Richtung des durchtretenden Lichtes ist, umso größer ist die Einwirkung der Schicht auf den Lichtstrahl. Diese Einwirkung besteht beispielsweise darin, dass der Lichtstrahl gebrochen oder verzerrt und eine etwaige Polarisation verändert wird.

Außerdem zeigt eine Vorform mit einem an die erste gekrümmte Oberfläche (und optimalerweise auch an die zweite gekrümmte Oberfläche) angepassten Schichtenverlauf eine verbesserte Schleifbarkeit im optisch wirksamen Oberflächenbereich. Dies ist darauf zurückzuführen, dass dieser Oberflächenbereich - im Idealfall - von keiner Schicht durchstoßen wird.

Es hat sich gezeigt, dass diese Orientierung der Schichten eine vergleichsweise geringe Beeinträchtigung der vom optischen Bauteil übertragenen Lichtstrahlung gewährleistet und bei einem optischen System, das derartige optische Meniskuslinsen enthält, zu geringen Abbildungsfehlern führt.

Bei jeder der oben erläuterten Verfahrensvarianten für das Umformen des Rohlings sind die Orientierung der Schichten im Rohling und die Orientierung des Rohlings beim Umformen zu beachten.

In der Meniskuslinse verläuft zumindest die der ersten gekrümmten Oberfläche benachbarte Schicht, und im Idealfall alle Schichten, in gleicher Krümmungsrichtung wie die Linsenkrümmung der ersten gekrümmten Oberfläche.

Das bedeutet, dass die Schichten möglichst über ihre gesamte Flächenerstreckung dem Bereich der Krümmung der Oberfläche im Wesentlichen folgen. Diese Orientierung der Schichten gewährleistet eine vergleichsweise geringe Beeinträchtigung der von der Meniskuslinse übertragenen Lichtstrahlung und führt zu geringen Abbildungsfehlern, und sie trägt sogar zur Abbildung bei.

Die Meniskuslinse ist für den Einsatz in einem Belichtungs- oder Projektionssystem eines Mikrolithographiegerätes besonders gut geeignet.

### Ausführungsbeispiel

Nachfolgend wird die Erfindung anhand eines Ausführungsbeispiels näher erläutert.
- **Figur 1**: einen Schichten enthaltenden zylinderförmigen Rohling aus Quarzglas zur Herstellung einer optischen Linse vor der Formgebung, und
- **Figur 2**: das nach der Formgebung aus dem Rohling erhaltene optische Bauteil in schematischer Darstellung.

Durch Flammenhydrolyse von SiCl₄ werden in der Brennerflamme eines Abscheidebrenners SiO₂-Sootpartikel gebildet und mittels des VAD-Verfahrens auf einem rotierenden Träger unter Bildung eines VAD-Vollzylinders aus porösem SiO₂ schichtweise abgeschieden. Der so erhaltene Soot-Zylinder wird mittels der allgemein üblichen Verglasungsprozesse zu einem Quarzglaszylinder mit einem Außendurchmesser von 300 mm und eine Höhe von 80 mm verarbeitet. Dieser dient als Linsenrohling für ein Projektionsobjektiv, das sich durch eine hohe Transparenz im kurzwelligen UV-Bereich und durch hohe UV-Strahlenbeständigkeit auszeichnet und das für den Einsatz in der Mikrolithographie geeignet ist.

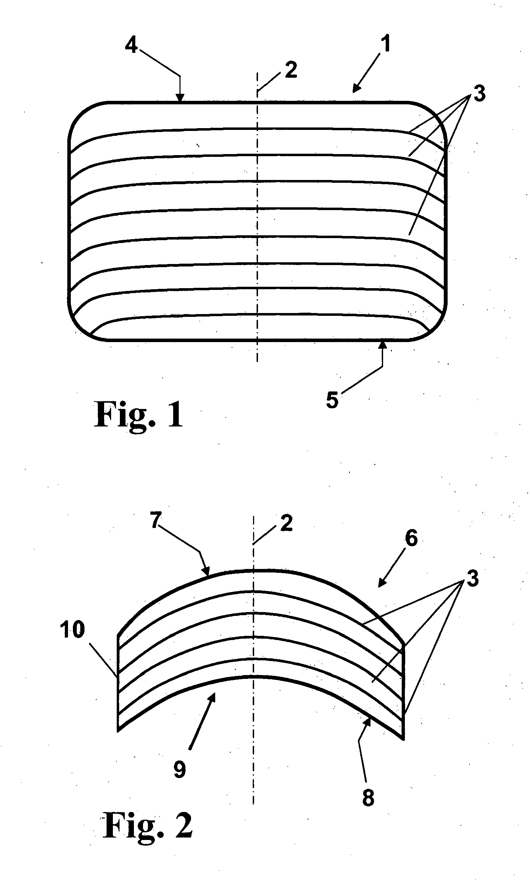

Figur 1 zeigt den zylinderförmigen Quarzglasrohling 1 in einem Schnitt parallel zur Zylinder-Längsachse 2. Der Quarzglasrohling 1 zeigt im Wesentlichen planparallel zur Oberseite 4 und zur Unterseite 5 des Rohlings 1 verlaufende Schichten 3. Der Schichtaufbau verläuft in Aufwachsrichtung des ursprünglichen VAD-Sootzylinders und senkrecht zur Längsachse 2.

Die Schichten 3 werden mittels interferometrisch sichtbar gemacht, so dass ihr Verlauf und ihre Orientierung innerhalb des Rohlings 1 vor dessen Weiterverarbeitung bekannt sind.

Der Quarzglasrohling 1 wird anschließend anhand eines Heißverformungsprozesses zu einer Vorform für eine Meniskuslinse mit konvexer und konkaver Oberfläche umgeformt. Nachfolgend werden Beispiele für den Umformprozess näher erläutert:

### Beispiel 1

Der Quarzglasrohling wird auf einer Drehbank mittels einer Pfeife so aufgenommen, dass die Flächennormale auf die Schichten parallel zur Längsachse der Pfeife verläuft. Der Rohling wird in eine Grafitform mit nach außen gewölbtem Boden gedrückt. Der Rohling wird dabei mittels eines Gasbrenners auf eine Temperatur von etwa 2000 °C aufgeheizt. Mittels der Grafitform wird eine erste, konvex gekrümmte Linsenoberfläche erzeugt. Die zweite, konkav gekrümmte Oberfläche wird erzeugt, indem die Pfeife entfernt und in die Oberseite des weichen Quarzglaspostens ein Grafitstempel mit konvexer Oberfläche gepresst wird.

Es wird eine Vorform für eine Meniskuslinse mit einer ersten, konvex gekrümmten Linsenoberfläche und mit einer zweiten, konkav gekrümmten Oberfläche erhalten.

### Beispiel 2

Der Quarzglasrohling 1 wird in eine Grafitform gestellt und mit einem Stempel beschwert. Die Grafitform hat einen konkav gekrümmten Boden und der Stempel eine als Kugelsegment ausgeformte, konvex gekrümmte Unterseite. Beide Teile bestehen aus hochreinem, porösem Grafit. Zum Verformen wird die gesamte Form mit dem darin befindlichen Quarzglasrohling 1 soweit aufgeheizt, dass das Quarzglas erweicht und unter Wirkung seines eigenen Gewichts in die Form ausfließt und diese dabei ausfüllt. Gleichzeitig verformt der aufliegende Stempel die Oberseite der weichen Quarzglasmasse, so dass sich eine Vertiefung mit konkaver Form ausbildet.

Der Quarzglesrohling 1 wird zunächst auf 1350 °C aufgeheizt und anschließend mit einer Rampe 9 °C/min auf 1700 °C aufgeheizt und danach mit einer Rampe von 2 °C/min auf eine Temperatur von 1780 °C. Bei dieser Temperatur wird die Quarzglasmasse für etwa 15 Minuten gehalten. Sie wird dabei in die Form eingesenkt und gleichzeitig wird der Stempel eingedrückt.

Die innere Form des. Grafitformbodens und die äußere Form des aufliegenden und eingedrückten Stempels ergeben die Konvex-Konkav-Form der Vorform 6, wie sie schematisch in Figur 2 dargestellt ist.

Die im zylinderförmigen Quarzglasrohling 1 planparallel verlaufenden Schichten sind in der linsenförmigen Vorform 6 so verformt, dass sie mindestens teilweise der konvexen Außenform 7 und der konkaven Außenform 8 der Linse folgen. Die Schichten verlaufen nicht parallel zueinander, sondern schmiegen tendenziell sich an den Rand der Vorform 6 an. Dadurch wird verhindert, dass die Schichten 3 in stumpfem Winkel an der Oberfläche enden, wie dies aus dem Stand der Technik bekannt ist. Beim bestimmungsgemäßen Einsatz der aus der Vorform erhaltenen optischen Linse liegt der Winkel zwischen der Richtung des durchtretenden Lichts und den Schichten 3 um 90 Grad, und er ist zumindest größer als er es wäre, wenn die Schichten planparallel verlaufen würden, wie im eingangs genannten Stand der Technik empfohlen.

Die Flächennormale auf die Schichten verläuft über deren gesamte Flächenerstreckung im optisch wirksamen Bereich in einem Winkel zwischen 80° und 100° zu beiden gekrümmten Oberflächen.

Aus der Vorform 6 wird durch Entfernen eines Übermaßes und durch eine mechanische Endbearbeitung und Abschleifen der Seiten 10 zwecks Einfassung, eine Linse 9 mit einem Gewicht von 9 kg, einem Durchmesser von 250 mm und einer maximalen Dicke von 90 mm erhalten. Der optischwirksame Bereich entspricht den verbleibenden gekrümmten Linsenoberflächen 7, 8

Die Linse 9 wird in ein mikrolithographisches Projektionssystem so eingesetzt, dass die vorhandenen Schichten möglichst senkrecht zur Richtung des durchtretenden Lichts verlaufen, oder, mit anderen Worten, dass der Winkel der Richtung des durchtretenden Lichts zu den Flächennormalen der Schichten möglichst klein ist.

## Patentansprüche

1. Verfahren zur Herstellung einer Meniskuslinse aus synthetischem Quarzglas für den Einsatz in einem Mikrolithographiegerät, die eine erste optische Oberfläche und eine zweite optische Oberfläche (7, 8) mit gleicher Krümmungsrichtung wie die erste optische Oberfläche aufweist, umfassend einen Verfahrensschritt, bei dem SiO₂-Partikel durch Oxidation oder Flammenhydrolyse einer siliziumhaltigen Ausgangsverbindung gebildet werden und diese schichtweise auf einem Träger unter Bildung eines zylinderförmigen SiO₂-Rohlings (1), der Schichten (3) mit einer sich in Aufwachsrichtung erstreckenden Flächennormalen enthält, abgeschieden werden, **dadurch gekennzeichnet, dass** der Rohling (1) in einem Heißverformungsprozess unter Einwirkung einer Verformungskraft zu einer Vorform (6) plastisch umgeformt wird, die mindestens die erste gekrümmte Oberfläche (7) aufweist und in der die Schichten in Krümmungsrichtung gekrümmt verlaufen, und dass aus der Vorform (6) die Meniskuslinse erhalten wird.

2. Verfahren nach Anspruch 1, **dadurch gekennzeichnet, dass** der Heißverformungsprozess einen Umformschritt umfasst, bei dem der Rohling (1) in eine Drehbank aufgenommen, erweicht und werkzeugfrei zu der Vorform (6) umgeformt wird.

3. Verfahren nach Anspruch 2, **dadurch gekennzeichnet, dass** die Meniskuslinse durch mechanische Bearbeitung der zweiten Oberfläche (8) oder durch einen in Richtung der Schichten-Flächennormalen wirkenden Pressstempel erhalten wird.

4. Verfahren nach Anspruch 1, **dadurch gekennzeichnet, dass** der Heißverformungsprozess einen Umformschritt umfasst, bei dem der Rohling (1) mittels einer Glasmacherpfeife aufgenommen, erweicht und in einer Graphitform zu der Vorform (6) umgeformt wird.

5. Verfahren nach Anspruch 1, **dadurch gekennzeichnet, dass** der Heißverformungsprozess einen Umformschritt umfasst, bei dem der Rohling (1) in einem Ofen erweicht und in eine Graphitform unter Bildung der Vorform (6) ausfließt.

6. Verfahren nach Anspruch 5, **dadurch gekennzeichnet, dass** die Graphitform eine gewölbte Unterseite aufweist, die die erste gekrümmte Oberfläche (7) erzeugt, und dass die zweite gekrümmte Oberfläche (8) durch plastische Vorform mittels eines auf den Rohling (1) in Richtung der Schichten-Flächennormalen einwirkenden gewölbten Körpers erzeugt wird.

7. Verfahren nach einem der vorhergehenden Ansprüche, **dadurch gekennzeichnet, dass** die Flächennormale auf die der ersten gekrümmten Oberfläche (7) benachbarte Schicht (3) über ihre gesamte Flächenerstreckung in einem Winkel zwischen 70° und 110° zur ersten gekrümmten Oberfläche (7) verläuft.

8. Verfahren nach Anspruch 7, **dadurch gekennzeichnet, dass** die Flächennormale in einem Winkel zwischen 80° und 100° zur ersten gekrümmten Oberfläche (7) verläuft.

## Claims

1. A method for producing a meniscus lens from synthetic quartz glass for use in a microlithography apparatus, said lens having a first optical surface and a second optical surface (7, 8) with direction of curvature the same as the direction of curvature of the first optical surface, said method comprising a step of forming SiO₂ particles by oxidation or flame hydrolysis of a silicon-containing starting compound, depositing said SiO₂ particles layer by layer on a substrate so as to form a cylindrical SiO₂ blank (1) that contains layers (3) with a surface normal extending in a growing direction, **characterized in that** the blank (1) is plastically worked in a hot forming process under the effect of a deforming force so as to form a preform (6) that includes at least the first curved surface (7) and in which the layers are curved in the direction of curvature, and obtaining the meniscus lens from the preform (6).

2. The method according to claim 1, **characterized in that** the hot forming process comprises a forming step in which the blank (1) is accommodated in a lathe, softened and shaped without tools so as to obtain the preform (6).

3. The method according to claim 2, **characterized in that** the meniscus lens is obtained by machining the second surface (8) or by a press ram operative in the direction of the layer surface normals.

4. The method according to claim 1, **characterized in that** the hot forming process comprises a forming step in which the blank (1) is accommodated using a blowpipe, softened and formed in a graphite mold so as to obtain the preform (6).

5. The method according to claim 1, **characterized in that** the hot forming process comprises a forming step in which the blank (1) is softened in a furnace and flows out into a graphite mold so as to form the preform (6).

6. The method according to claim 5, **characterized in that** the graphite mold has an arched bottom side that produces the first curved surface (7), and that the second curved surface (8) is produced by plastic deformation using an arched body acting on the blank (1) in the direction of the layer surface normals.

7. The method according to any one of the preceding claims, **characterized in that** one (3) of the layers is adjacent the first curved surface (7) and has a surface, the surface normal to said surface over the whole surface is at an angle between 70° and 110° to the first curved surface.

8. The method according to claim 7, **characterized in that** the surface normal extends at an angle between 80° and 100° to the first curved surface (7).

## Revendications

1. Procédé pour la fabrication d'une lentille-ménisque en verre de quartz synthétique destinée à être utilisée dans un appareil microlithographique qui présente une première surface optique et une seconde surface optique (7, 8) avec une direction de courbure identique, comprenant une étape de procédé, où des particules de SiO₂ sont formées par oxydation ou hydrolyse à la flamme d'une liaison initiale contenant du silicium qui est déposée par couche sur un substrat en formant une ébauche SiO₂ (1) de forme cylindrique, qui contient des couches (3) avec une normale de surface s'étendant dans la direction de croissance, **caractérisé en ce que** l'ébauche (1) est déformée plastiquement dans un processus de déformation à chaud en appliquant une force de déformation pour obtenir une préforme (5), qui présente au moins la première surface préformée (7), dans laquelle les couches s'étendent dans la direction de la courbure et **en ce que** la lentille-ménisque est obtenue à partir de la préforme (8).

2. Procédé selon la revendication 1, **caractérisé en ce que** le processus de formation à chaud présente une étape de déformation où l'ébauche (1) est logée dans un tour, est ramollie et est transformée en la préforme (6).

3. Procédé selon la revendication 2, **caractérisé en ce que** la lentille-ménisque est obtenue par usinage mécanique de la seconde surface (8) ou est obtenue par un poinçon agissant dans la direction des normales de couche.

4. Procédé selon la revendication 1, **caractérisé en ce que** le processus de formation à chaud comprend une étape de déformation où l'ébauche est prise par une canne de verrier, ramollie et est déformée dans un moule graphite en une préforme (89).

5. Procédé selon la revendication 1, **caractérisé en ce que** le processus de déformation à chaud comprend une étape de déformation, où l'ébauche (1) est ramollie dans un four et s'écoule dans un moule graphite pour former la préforme (6).

6. Procédé selon la revendication 5, **caractérisé en ce que** le moule graphite (7) présente une face inférieure bombée qui génère la première surface courbée et **en ce que** la seconde surface courbée (8) est générée par déformation plastique au moyen d'un corps courbé agissant sur l'ébauche (1) en direction de la normale de surface des couches.

7. Procédé selon l'une des revendications précédentes, **caractérisé en ce que** la normale de surface s'étend sur la couche (3) adjacente à la première surface sur l'ensemble de la surface dans un angle compris entre 70° et 110° jusqu'à la première surface courbée (7).

8. Procédé selon la revendication 7, **caractérisé en ce que** la normale de surface s'étend dans un angle compris entre 80° et 110° jusqu'à la première surface courbée (7).
